(19) Europäisches Patentamt
European Patent Office
Office européen des brevets

(11) **EP 2 045 995 A1**

(12) **EUROPEAN PATENT APPLICATION**

(43) Date of publication:
**08.04.2009 Bulletin 2009/15**

(51) Int Cl.:
**H04L 29/06** (2006.01)

(21) Application number: **08100243.8**

(22) Date of filing: **09.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **05.10.2007 US 905905**

(71) Applicant: **Subex Limited**
**Devarabisannalli**
**Bangalore 560 037 (IN)**

(72) Inventors:
• **Savadi, Prasad Madhwa**
**c/o Mr M.R. SAVADI**
**590006, Karnataka (IN)**
• **Pulikunnel, Kiran Zachariah**
**Benson Town**
**Bangalore**
**560046, Karnataka (IN)**

(74) Representative: **Walaski, Jan Filip et al**
**Venner Shipley LLP**
**20 Little Britain**
**London EC1A 7DH (GB)**

(54) **Detecting Fraud in a Communications Network**

(57) The application relates to a method and apparatus for ranking data relating to use of a communications network according to the likelihood that the use is fraudulent, the method comprising receiving a first data set comprising a plurality of parameter values relating to each of a plurality of observed fraudulent uses of the communications network and establishing a first model for the parameters of the first data set, receiving a second data set comprising a plurality of parameter values relating to each of a plurality of observed non-fraudulent uses of the communications network and establishing a second model for the parameters of the second data set, receiving a third data set comprising a plurality of parameter values relating to a subsequent use of the communications network, applying the third data set to the first and second models, determining the likelihoods that the third data set is compatible with the first and second models and determining a ranking for the subsequent use within a plurality of subsequent uses to be investigated for fraud based on the determined respective likelihoods.

| | |
|---|---|
| S1.1 | Receive Historical Data Set of Confirmed Fraudulent and Non-Fraudulent usage |
| S1.2 | Generate and Populate Transition Matrices for Master Fraud and Non-Fraud Models |
| S1.3 | Generate and Populate Sensor Matrices for Master Fraud and Non-Fraud Models |
| S1.4 | Generate and Populate Prior Probability List for Master Fraud and Non-Fraud Models |
| S1.5 | Generate Intermediate Fraud and Non-Fraud Models Corresponding to Master Fraud and Non-Fraud Models |

Fig. 3

**Description**

Aspects of the present invention relate to detecting fraud in a communications network, particularly but not exclusively to a method and apparatus for ranking data relating to use of a communications network according to the likelihood that the use is fraudulent.

Successful fraud prevention in communications networks is governed by the ability of implemented solutions to not only detect the occurrence of fraud at the earliest opportunity, but to pre-empt fraud, where possible, rather than reacting after the fraud has occurred.

Rules based fraud detection systems have been developed, in which events occurring in a communications network are compared to one or more rules designed to be indicative of fraud. In the event that a rule is violated, an alarm is raised which can be investigated by a fraud analyst. The sooner that the fraud is investigated, the shorter the duration for which the fraud may be prevalent in the network before it is identified, also referred to as the fraud run.

Conventionally, to minimise the fraud run, fraud analysts assess the priority of alarms that have been raised based on predetermined values associated with an event on the network such as a call, these values designed to indicate the importance of the alarm in terms of the seriousness or likelihood of the potential fraud. Accordingly, high priority alarms can be investigated before lower priority ones. For instance, the priority could be based on whether a particular rule has been violated, the amount of time that a user has been subscribed to the network or the monetary value of a call in the network. However, none of these values can provide a fail-safe assessment of the seriousness of the alarm and, as a result, in conventional systems, serious alarms are not necessarily investigated as a matter of priority.

A common way that prior art systems have attempted to address this problem is to associate a score with each alarm. The score is computed based on the perceived severity of the rule violation that resulted in the alarm being raised. An expert in the particular domain where the rules based system is deployed, generally configures the severity of each of the rules.

However, this approach is time consuming and open to human error, for instance in the establishment of the severities of the rules. Also, the approach does not take into account the changing performance of rules over time, for instance as a result of changes within the environment in which the fraud is occurring, which can further jeopardise the accuracy of the scores or increase the time and cost of implementing the fraud detection system. In addition, such an approach merely takes into account the particular rule violation and the score associated with it, and is therefore a relatively simplistic indicator of the priority of an alarm.

The present invention aims to address these drawbacks. According to the invention, there is provided a method of ranking data relating to use of a communications network according to the likelihood that the use is fraudulent, the method comprising receiving a first data set comprising a plurality of parameter values relating to each of a plurality of observed fraudulent uses of the communications network and establishing a first model for the parameter values of the first data set, receiving a second data set comprising a plurality of parameter values relating to each of a plurality of observed non-fraudulent uses of the communications network and establishing a second model for the parameter values of the second data set, receiving a third data set comprising a plurality of parameter values relating to a subsequent use of the communications network, applying the third data set to the first and second models, determining the likelihoods that the third data set is compatible with the first and second models, and determining a ranking for the subsequent use within a plurality of subsequent uses to be investigated for fraud based on the determined respective likelihoods.

The parameter values of the first, second and third data sets may be associated with rule violations resulting from rule thresholds being exceeded and at least one out of the first and second models can take into account the order in which the rule violations occur.

The parameter values of the first, second and third data sets may be associated with respective rule violations resulting from rule thresholds being exceeded and at least one out of the first and second models can take into account the interdependency between the rule violations.

The first and second models can comprise hidden Markov models.

The method can further comprise determining whether the subsequent use is fraudulent or non-fraudulent, using the third data set to update the first model when the subsequent use is determined to be fraudulent, and using the third data set to update the second model when the subsequent use is determined to be non-fraudulent.

Updating the first model can comprise updating an intermediate model and periodically updating the first model from the intermediate model.

Updating the second model can comprise updating an intermediate model and periodically updating the second model from the intermediate model.

According to the invention, there is further provided an apparatus for ranking data relating to use of a communications network according to the likelihood that the use is fraudulent, the apparatus comprising a processor configured to receive a first data set comprising a plurality of parameter values relating to each of a plurality of observed fraudulent uses of the communications network, generate a first model for the parameters of the first data set, receive a second data set comprising a plurality of parameter values relating to each of a plurality of observed non-fraudulent uses of the communications network, generate a second model for the parameters of the second data set, receive a third data set comprising a plurality of parameter values relating to a subsequent use of the communications network, apply the third data set to the first and second models to determine the likelihoods that the third data set is compatible with the first and the second models, and determine a ranking for the subsequent use within a plurality of subsequent uses to be investigated for fraud based on the determined respective likelihoods.

The parameter values of the first, second and third data sets can be associated with respective rule violations resulting from rule thresholds being exceeded and at least one out of the first and second models can take into account the order in which the rule violations occur and/or the interdependency between the rule violations.

Following a determination as to whether the subsequent use is fraudulent or non-fraudulent, the processor can be further configured to use the third data set to update the first model when the subsequent use is determined to be fraudulent and use the third data set to update the second model when the subsequent use is determined to be non-fraudulent.

Using the third data set to update the first model can comprise using the third data set to update an intermediate model and periodically updating the first model from the intermediate model. Using the third data set to update the second model can comprise using the third data set to update an intermediate model and periodically updating the second model from the intermediate model.

According to the invention, there is also provided a method of determining a measure of the likelihood that an entity belongs to a first group, the method comprising receiving a first data set comprising a plurality of values relating to each of a plurality of entities known to belong to the first group, the values associated with rule thresholds which have been exceeded, establishing a first model for the values of the first data set, receiving a second data set comprising a plurality of values relating to each of a plurality of entities known to belong to a second group, the values associated with rule thresholds which have been exceeded, establishing a second model for the values of the second data set, receiving a third data set comprising a plurality of values relating to a further entity, applying the third data set to the first and second models to determine the likelihoods that the third data set is compatible with the first and second models, and determining the measure for the further entity based on the respective likelihoods.

Embodiments of the invention will now be described, by way of example, with reference to the accompanying drawings, in which:

Figure 1 schematically illustrates a fraud detection system according to an embodiment of the present invention;
Figure 2 is a flow diagram illustrating the steps performed in the system of Figure 1 in ranking fraud alarm data;
Figure 3 is a flow diagram illustrating the steps performed in the system of Figure 1 in generating fraud and non-fraud models;
Figure 4 is a flow diagram illustrating the steps performed in the system of Figure 1 in applying the fraud and non-fraud models to current fraud alarm data in order to apply a ranking to the alarm data; and
Figure 5 is a flow diagram illustrating the process of iteratively adapting the fraud and non-fraud models based on newly qualified fraud alarm data.

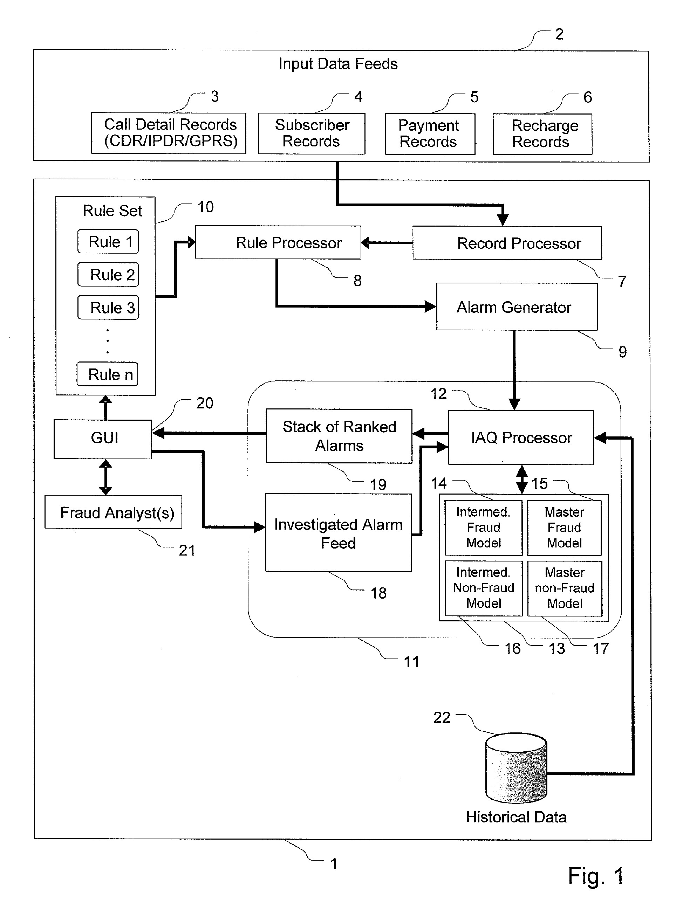

Referring to Figure 1, a fraud detection system 1 according to an embodiment of the invention receives a plurality of input data feeds 2 from a communications network, in the present example the network incorporating both a public switched telephone network (PSTN) and a mobile telephone network. The data feeds 2 comprise, in the present example, communication event records 3 such as call detail records (CDRs), internet protocol detail records (IPDR) and general packet radio service (GPRS) records, subscriber records 4 including accounting and demographic details of subscribers, payment records 5 relating to subscriber bill payments and recharge records 6 relating to top-up payments made by pre-paid subscribers.

The fraud detection system 1 includes a record processor 7 connected to the input data feeds 2, a rule processor 8 connected to an alarm generator 9 and arranged to operate based on the rules in a rule set 10. The alarm generator 9 is, in turn, connected to an intelligent alarm qualifier (IAQ) module 11.

The IAQ module 11 includes an IAQ processor 12 connected to a set of models 13 including intermediate and master fraud models 14, 15 and intermediate and master non-fraud models 16, 17. The IAQ processor 12 is connected to an alarm feed 18 of investigated alarms as well as to a stack of ranked alarms 19.

The fraud detection system 1 also includes a graphical user interface (GUI) 20, which is connected to the investigated alarm feed 18 and to the stack of ranked alarms 19. A plurality of fraud analysts 21 access the fraud detection system 1 via the GUI 20. The GUI 20 is also connected to the rule set 10.

The fraud detection system 1 also includes a database 22 containing historical data relating to a plurality of alarms which have been investigated and confirmed to relate to either fraudulent or non-fraudulent use of the telecommunications network.

The fraud detection system 1 is a rule-based system (RBS) in which rules in the rule set 10, when violated, for instance when a threshold value associated with the rule is exceeded, generate alerts pertaining to and containing information about the rule violation. The generation of an alert for a particular entity in the network causes the alarm generator 9 to generate an alarm for that entity, if an alarm does not already exist, and corresponding action is taken by the fraud analysts 21. The rules in the rule set 10 are configured by a domain expert and are pertinent to one domain, in the present example the telecommunications network from which the input data feeds 2 are received. The rules tie the RBS to the domain.

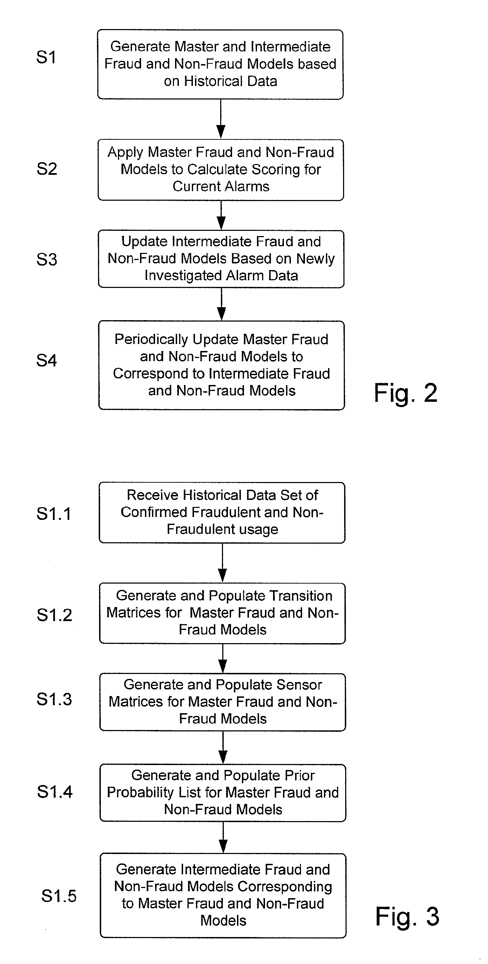

Figure 2 is a flow diagram illustrating the steps performed in the system of Figure 1 in ranking fraud alarm data.

Referring to Figure 2, in an initial step (step S1), the master and intermediate fraud and non-fraud models 14 to 17 are generated based on historical data stored in the database 22. In the present example, the master and intermediate fraud and non-fraud models 14 to 17 are hidden Markov models, which will now be described in more detail.

A hidden Markov model (HMM) is a doubly embedded stochastic process with an underlying stochastic process that is not observable (i.e. it is hidden), but can only be observed through another set of stochastic processes that produce a sequence of observations.

An HMM can be in 'N' distinct states (which are hidden) at any given instant of time, say $S_1, S_2, ..., S_N$. Let each state emit one of the **'M'** symbols (observations) denoted by - $O_1, O_2, ..., O_M$.

A first order HMM can be defined by the following:

- N, the number of states (hidden) in the model;
- M, the number of distinct observation symbols;
- The state transition probability distribution (transition matrix) **A** = {$a_{ij}$}

where

$$a_{ij} = P[q_{t+1} = S_j \mid q_t = S_i], \ \ 1 <= i,j \ <= N,$$

$q_t$ - is the state (hidden) at time 't';

- The observation symbol probability distribution (sensor matrix) B = {$b_j(k)$}

where

$$b_j(k) = P[v_k \ at \ t \mid q_t = S_i],$$
$$1 <= j <= N, 1 <= k <= M,$$

$v_k$ - the symbol (observation); and

- The initial state distribution (prior probability list) $\Pi$ = {$\Pi_i$}

where

$$\Pi_i = P[q_1 = S_j], \qquad 1 <= i \ <= N.$$

In the fraud detection system 1, the hidden Markov model is implemented such that each rule violation is considered to be an observation '**O**' of the hidden Markov model, and the hidden state is considered to be the severity of the rule violation. A basic problem which the hidden Markov model is used to solve in the fraud detection system is:

'Given a model with the parameters **M, N, A, B,** and $\Pi$, and a sequence of observations **($O_1, O_2, ..., O_k$)**, what is the likelihood that this sequence was generated by the model?'

The likelihood is a probabilistic measure with higher likelihood indicating that the sequence was indeed generated by the model and vice versa.

In the IAQ module 11 illustrated in Figure 1, two master hidden Markov models are used, a first 15 to model fraudulent use of the telecommunications network and a second 17 to model non-fraudulent use of the telecommunications network, as well as two corresponding intermediate hidden Markov models 14, 16. The above probabilistic measure is defined as P(frd) for the master fraud model 15 and P(nfr) for the non-fraud model 17.

Figure 3 illustrates the steps performed in generating the models 14 to 17 in more detail.

Referring to Figure 3, the historical data stored in the database 22 relating to observed fraudulent and non-fraudulent usage of the telecommunications network by entities in the network is received at the IAQ processor 12 (step S1.1). The transition matrices for each of the master fraud and non-fraud models (15, 17) are then generated and populated using the historical data (step S1.2). The sensor matrices for each of the master fraud and non-fraud models (15, 17) are also generated and populated using the historical data (step S1.3) as well as the prior probability list for each of the master fraud and non-fraud models (15, 17). The intermediate fraud and non-fraud models 14, 16 are then generated as copies of the populated matrices and prior probability list for the master fraud and non-fraud models 15, 17 (step S1.5).

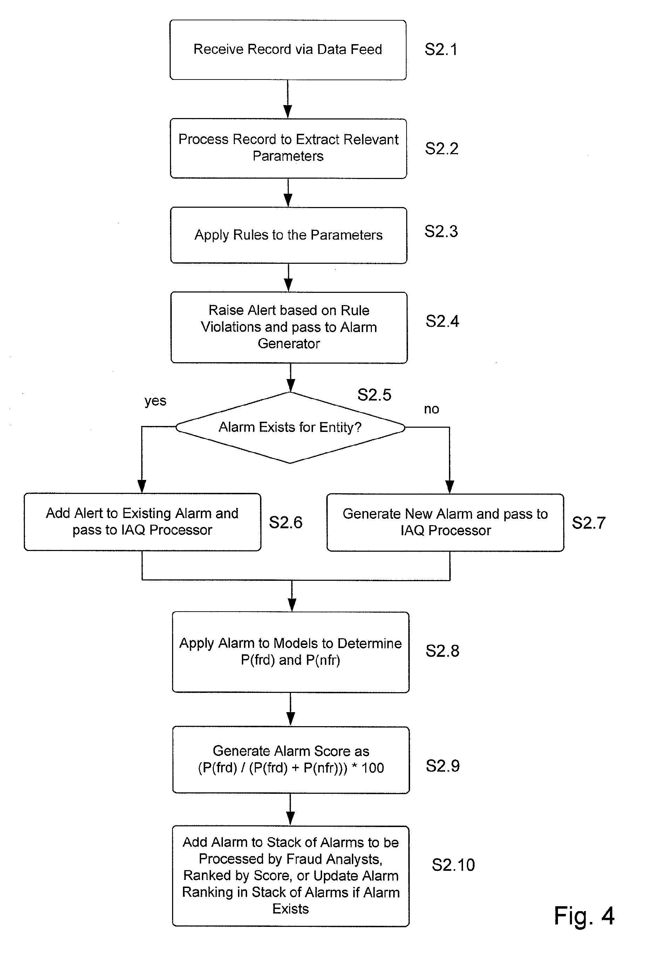

Referring again to Figure 2, once the learning process involved in the generation of the models is complete, the master fraud and non-fraud models 15, 17 can be applied to calculate alarm scoring, also referred to as ranking or qualifying, to alarms that are generated by the alarm generator 9 (step S2). Figure 4 illustrates this process.

Referring to Figure 4, a record is received at the record processor 7 via the data feeds 2 (step S2.1) and processed to extract relevant parameters (step S2.2). These parameters are, for instance, parameters specified in the set of rules 10. Rules 1 to n in the rule set 10 are applied to the parameters by the rule processor 8 (step S2.3), which, if any rules are violated, raises alerts and passes the alerts to the alarm generator 9 (step S2.4). The alerts indicate, in the present example, details of the rule that has been violated and details of an entity in the network associated with the violation, for instance a particular subscriber, call event or geographical location.

The alarm generator 9 then determines whether a current alarm exists for the entity associated with the alert, for instance as the result of a recent alert raised for the entity. To do this, the stack of ranked alarms 19 is consulted by the alarm generator 9 either directly or via the IAQ processor 12.

If an alarm already exists for the entity, the new alert is added to the alarm and the alarm is passed to the IAQ processor 12 (step S2.6). Alternatively, if no alarm currently exists for the entity, a new alarm is generated and passed to the IAQ processor 12 (step S2.7).

The IAQ processor 12 then applies the alarm to the master fraud and non-fraud models 15, 17 to determine the respective (likelihood) probabilities P(frd) and P(nfr) that the rule violations that caused the alarm resulted from the master fraud and non-fraud models 15, 17 (step S2.8). An alarm score is then generated (step S2.9) as:

$$\mathbf{Score = (Pfrd \ / \ (Pfrd + Pnfr)) * 100}$$

The alarm is then added to the stack of alarms 19 to be processed by the fraud analysts 21, ranked according to their scores (step S2.10).

Accordingly, as and when any of the alarms in the alarm stack 19 get updated with newer information, for instance as a result of further alerts being generated, the alarm is again ranked by the IAQ processor 12 and the ranking of the alarm in the stack 19 is updated.

As alarms are added to the alarm stack 19, they can be processed by fraud analysts 21, who investigate alarms in order of their ranking, to determine whether the alarm is in fact indicative of fraud in the communications network. Once such investigations are complete, the resulting information is used to prevent further fraud in the network, such as by black-listing one or more subscribers associated with the fraud. In addition, the data can be used to iteratively improve the fraud and non-fraud models 15, 17.

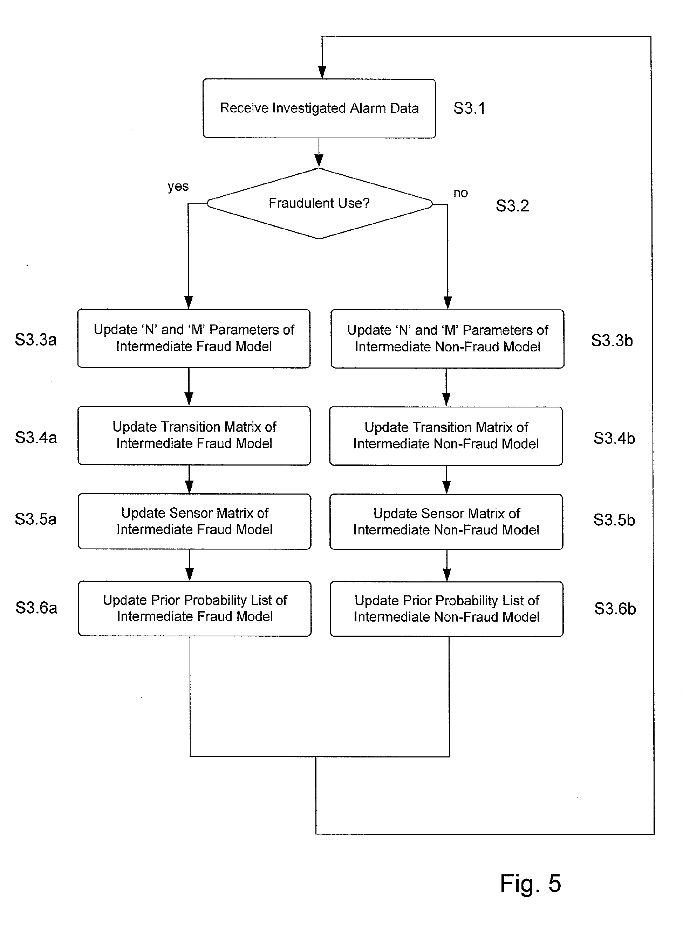

In particular, referring to Figure 2, the intermediate fraud and non-fraud models 14, 16 are updated based on newly investigated alarm data received via the investigated alarm feed 18 (step S3). Figure 5 illustrates this process in more detail.

Referring to Figure 5, the investigated alarm data is received at the IAQ processor 12 (step S3.1), which determines whether the alarm has been classified as fraudulent or non-fraudulent (S3.2). If the alarm has been classified as fraudulent, the N and M parameters of the intermediate fraud model, indicative of the number of states and corresponding observations in the model, are incremented (step S3.3a). Following this, the transition matrix, sensor matrix and prior probability list of the intermediate fraud model are also updated based on the received alarm data (steps 3.4a to 3.6a).

Alternatively, if the alarm has been classified as non-fraudulent, the N and M parameters of the intermediate non-fraud model, indicative of the number of states and corresponding observations in the model, are instead incremented (step S3.3b). Following this, the transition matrix, sensor matrix and prior probability list of the intermediate non-fraud model are also updated based on the received alarm data (steps 3.4b to 3.6b).

Referring again to Figure 2, at periodic intervals, for instance at regular time intervals or after a predetermined number of investigated alarms have been received, the master fraud and non-fraud models are updated to correspond to the intermediate fraud and non-fraud models (step S4).

A basic example of the operation of the fraud detection system 1 will now be provided. Table 1.0 below illustrates historical data with which the master fraud and non-fraud models can be generated.

Table 1.0

| Alarm | Rule Violated | Age in Network at the point of rule violation (discretized) | Total Call Value (discretized) | Label |
|---|---|---|---|---|
| A1 | R1 | N1 | V1 | Fraud |
| | R3 | N2 | V1 | |
| A2 | R1 | N1 | V1 | Non-Fraud |
| | R5 | N2 | V1 | |
| A3 | R1 | N1 | V1 | Fraud |
| A4 | R3 | N2 | V1 | Non-Fraud |

The two master models 15, 17 are, in the present example, trained using the data in Table 1.0.

An exemplary set of alarms is listed in Table 2.0, along with their scores, and the reasons for which the scores were generated.

Table 2.0

| Alarm | Rule Violated | Age in Network at the point of rule violation (discretized) | Total Call Value (discretized) | Score Range | Reason |
|---|---|---|---|---|---|
| P1 | R1 | N1 | V1 | 80-100 | This pattern is an exact match with the alarm A1 (fraud), partial match with A3 (fraud) and a partial match with alarm A2 (non-fraud). Hence, more likely to be fraud. |
| | R3 | N2 | V1 | | |
| P2 | R1 | N1 | V1 | 10-30 | This pattern is a partial match with the alarm A1 (fraud), partial match with the alarm A3 (fraud) and an exact match with alarm A2 (non-fraud). Hence, more likely to be non-fraud. |
| | R5 | N2 | V1 | | |
| P3 | R1 | N1 | V1 | 80-100 | This pattern is an exact match with the alarm A1 (fraud), exact match with A3 (fraud) and an exact match with alarm A2 (non fraud). Hence, more likely to be fraud. |

(continued)

| Alarm | Rule Violated | Age in Network at the point of rule violation (discretized) | Total Call Value (discretized) | Score Range | Reason |
|---|---|---|---|---|---|
| P4 | R6 | N2 | V1 | 50 | This pattern does not match with any known patterns in the training data and hence, it is equally likely to be fraud or non fraud. |
| P5 | R5 | N2 | V1 | 25-40 | This pattern is a partial match with the alarm A1 (fraud), partial match with the alarm A3 (fraud) and an exact match (but reverse sequence) with alarm A2 (non fraud). Hence, likely to be non fraud but because the sequence is reversed, the score will be higher than for the alarm P2. |
| | R1 | N1 | V1 | | |

As more alarms are investigated and closed, the weightings for each model are updated, such as the entries in the transition and sensor matrices. Thus, over a period of time, alarms with the same rule patterns may obtain different scores. However, these scores are pertinent to the models at the time of their generation.

Tables 3.0, 4.0, 5.0 and 6.0 illustrate the results achieved in two trial implementations of the present invention.

| Pre IAQ - Customer 1 | | | | |
|---|---|---|---|---|
| Score Range (inclusive) | | Total Alarms | Fraud Alarm Count | Non Fraud Alarm Count |
| Lower Bound | Upper Bound | | | |
| 0 | 0 | 0 | 0 | 0 |
| 1 | 10 | 0 | 0 | 0 |
| 11 | 20 | 0 | 0 | 0 |
| 21 | 30 | 0 | 0 | 0 |
| 31 | 40 | 0 | 0 | 0 |
| 41 | 50 | 0 | 0 | 0 |
| 51 | 60 | 0 | 0 | 0 |
| 61 | 70 | 1334 | 0 | 1334 |
| 71 | 80 | 36 | 0 | 36 |
| 81 | 90 | 325 | 1 | 324 |
| 91 | 100 | 7618 | 79 | 7539 |
| TOTAL ALARMS | | 9313 | 80 | 9233 |

Out of a total of 9313 Alarms and 80 of them being Fraud:
- The Analyst has to go through 7618 Alarms (81% of Alarms) to catch 79 Fraud Alarms (98% of Fraud) – highlighted in yellow.

Table 3.0

| Post IAQ - Customer 1 | | | | |
|---|---|---|---|---|
| Score Range (inclusive) | | Total Alarms | Fraud Alarm Count | Non Fraud Alarm Count |
| Lower Bound | Upper Bound | | | |
| 0 | 0 | 4943 | 5 | 4938 |
| 1 | 10 | 159 | 0 | 159 |
| 11 | 20 | 1866 | 4 | 1862 |
| 21 | 30 | 272 | 0 | 272 |
| 31 | 40 | 167 | 0 | 167 |
| 41 | 50 | 483 | 13 | 470 |
| 51 | 60 | 429 | 4 | 425 |
| 61 | 70 | 429 | 2 | 427 |
| 71 | 80 | 259 | 1 | 258 |
| 81 | 90 | 130 | 2 | 128 |
| 91 | 100 | 176 | 49 | 127 |
| TOTAL ALARMS | | 9313 | 80 | 9233 |

Out of a total of 9313 Alarms and 80 of them being Fraud:
- The Analyst has to go through 1906 Alarms (20% of Alarms) to catch 71 Fraud Alarms (88% of Fraud) – highlighted in yellow.

Table 4.0

| Pre IAQ - Customer 2 | | | | |
|---|---|---|---|---|
| Score Range (inclusive) | | Total Alarms | Fraud Alarm Count | Non Fraud Alarm Count |
| Lower Bound | Upper Bound | | | |
| | | | | |
| 1 | 10 | 0 | 0 | 0 |
| 11 | 45 | 0 | 0 | 0 |
| 46 | 50 | 0 | 0 | 0 |
| 51 | 80 | 405 | 12 | 393 |
| 81 | 89 | 954 | 9 | 945 |
| 90 | 98 | 3370 | 272 | 3098 |
| 100 | 100 | 273 | 44 | 229 |
| Total Alarms | | 5002 | 337 | 4665 |

Out of a total of 5002 Alarms and 337 of them being Fraud:
- The Analyst has to go through 3643 Alarms (72% of Alarms) to catch 316 Fraud Alarms (93% of Fraud) – highlighted in yellow.

Table 5.0

| Post IAQ - Customer 2 | | | | |
|---|---|---|---|---|
| Score Range (inclusive) | | Total Alarms | Fraud Alarm Count | Non Fraud Alarm Count |
| Lower Bound | Upper Bound | | | |
| 1 | 10 | 2257 | 34 | 2223 |
| 11 | 45 | 1225 | 38 | 1187 |
| 46 | 50 | 914 | 50 | 864 |
| 51 | 80 | 224 | 54 | 170 |
| 81 | 89 | 123 | 24 | 99 |
| 90 | 99 | 129 | 47 | 82 |
| 100 | 100 | 130 | 90 | 40 |
| Total Alarms | | 5002 | 337 | 4665 |

Out of a total of 5002 Alarms and 337 of them being Fraud:
- The Analyst has to go through 1520 Alarms (30% of Alarms) to catch 265 Fraud Alarms (78% of Fraud) – highlighted in yellow.

Table 6.0

Both results indicate a drastic reduction in the amount of alarms the analyst has to go through to catch close to 80% of fraud.

Whilst embodiments of the invention has been described by way of specific examples, the invention is not limited to these examples. For instance, the invention is not limited to operating with a public switched telephone network (PSTN) and a mobile telephone network, but could be applied to other communications networks, as well as to any rule based system where a sequence of rule violations can be modelled using HMMs. For instance, the invention could be implemented in commercial or IT environments, for instance to detect credit card fraud based on transaction specific rules applied to credit card transaction data, or to determine computer network intrusion attempts based on local area network audit trail log files that are processed in a rule based intrusion detection system.

**Claims**

1.   A method of ranking data relating to use of a communications network according to the likelihood that the use is fraudulent, the method comprising:

receiving a first data set comprising a plurality of parameter values relating to each of a plurality of observed fraudulent uses of the communications network and establishing a first model for the parameter values of the first data set;
receiving a second data set comprising a plurality of parameter values relating to each of a plurality of observed non-fraudulent uses of the communications network and establishing a second model for the parameter values of the second data set;
receiving a third data set comprising a plurality of parameter values relating to a subsequent use of the communications network;
applying the third data set to the first and second models;
determining the likelihoods that the third data set is compatible with the first and second models; and
determining a ranking for the subsequent use within a plurality of subsequent uses to be investigated for fraud based on the determined respective likelihoods.

**2.** A method according to claim 1, wherein the parameter values of the first, second and third data sets are associated with rule violations resulting from rule thresholds being exceeded and wherein at least one out of the first and second models takes into account the order in which the rule violations occur.

**3.** A method according to claim 1 or 2, wherein the parameter values of the first, second and third data sets are associated with respective rule violations resulting from rule thresholds being exceeded and wherein at least one out of the first and second models takes into account the interdependency between the rule violations.

**4.** A method according to claim 1, 2 or 3, wherein the first and second models comprise hidden Markov models.

**5.** A method according to any one of the preceding claims, further comprising:

determining whether the subsequent use is fraudulent or non-fraudulent;
using the third data set to update the first model when the subsequent use is determined to be fraudulent; and
using the third data set to update the second model when the subsequent use is determined to be non-fraudulent.

**6.** A method according to claim 5, wherein updating the first model comprises updating an intermediate model and periodically updating the first model from the intermediate model.

**7.** A method according to claim 5 or 6, wherein updating the second model comprises updating an intermediate model and periodically updating the second model from the intermediate model.

**8.** An apparatus for ranking data relating to use of a communications network according to the likelihood that the use is fraudulent, the apparatus comprising:

a processor configured to:

receive a first data set comprising a plurality of parameter values relating to each of a plurality of observed fraudulent uses of the communications network;
generate a first model for the parameters of the first data set;
receive a second data set comprising a plurality of parameter values relating to each of a plurality of observed non-fraudulent uses of the communications network;
generate a second model for the parameters of the second data set; receive a third data set comprising a plurality of parameter values relating to a subsequent use of the communications network; apply the third data set to the first and second models to determine the likelihoods that the third data set is compatible with the first and the second models; and determine a ranking for the subsequent use within a plurality of subsequent uses to be investigated for fraud based on the determined respective likelihoods.

**9.** An apparatus according to claim 8, wherein the parameter values of the first, second and third data sets are associated with respective rule violations resulting from rule thresholds being exceeded and wherein at least one out of the first and second models takes into account the order in which the rule violations occur.

**10.** An apparatus according to claim 8 or 9, wherein the parameter values of the first, second and third data sets are associated with respective rule violations resulting from rule thresholds being exceeded and wherein at least one out of the first and second models takes into account the interdependency between the rule violations.

**11.** An apparatus according to claim 8, 9 or 10, wherein, following a determination as to whether the subsequent use is fraudulent or non-fraudulent, the processor is further configured to:

use the third data set to update the first model when the subsequent use is determined to be fraudulent; and
use the third data set to update the second model when the subsequent use is determined to be non-fraudulent.

**12.** An apparatus according to claim 11, wherein using the third data set to update the first model comprises using the third data set to update an intermediate model and periodically updating the first model from the intermediate model.

**13.** An apparatus according to claim 11 or 12, wherein using the third data set to update the second model comprises using the third data set to update an intermediate model and periodically updating the second model from the intermediate model.

**14.** A method of determining a measure of the likelihood that an entity belongs to a first group, the method comprising:

receiving a first data set comprising a plurality of values relating to each of a plurality of entities known to belong to the first group, the values associated with rule thresholds which have been exceeded;
establishing a first model for the values of the first data set;
receiving a second data set comprising a plurality of values relating to each of a plurality of entities known to belong to a second group, the values associated with rule thresholds which have been exceeded;
establishing a second model for the values of the second data set;
receiving a third data set comprising a plurality of values relating to a further entity;
applying the third data set to the first and second models to determine the likelihoods that the third data set is compatible with the first and second models; and
determining the measure for the further entity based on the respective likelihoods.

**15.** A method according to claim 14, wherein the first and second models comprise hidden Markov models.

Fig. 1

S1 | Generate Master and Intermediate Fraud and Non-Fraud Models based on Historical Data

S2 | Apply Master Fraud and Non-Fraud Models to Calculate Scoring for Current Alarms

S3 | Update Intermediate Fraud and Non-Fraud Models Based on Newly Investigated Alarm Data

S4 | Periodically Update Master Fraud and Non-Fraud Models to Correspond to Intermediate Fraud and Non-Fraud Models

Fig. 2

S1.1 | Receive Historical Data Set of Confirmed Fraudulent and Non-Fraudulent usage

S1.2 | Generate and Populate Transition Matrices for Master Fraud and Non-Fraud Models

S1.3 | Generate and Populate Sensor Matrices for Master Fraud and Non-Fraud Models

S1.4 | Generate and Populate Prior Probability List for Master Fraud and Non-Fraud Models

S1.5 | Generate Intermediate Fraud and Non-Fraud Models Corresponding to Master Fraud and Non-Fraud Models

Fig. 3

Receive Record via Data Feed — S2.1

Process Record to Extract Relevant Parameters — S2.2

Apply Rules to the Parameters — S2.3

Raise Alert based on Rule Violations and pass to Alarm Generator — S2.4

S2.5 — Alarm Exists for Entity?

yes → Add Alert to Existing Alarm and pass to IAQ Processor — S2.6

no → Generate New Alarm and pass to IAQ Processor — S2.7

Apply Alarm to Models to Determine P(frd) and P(nfr) — S2.8

Generate Alarm Score as (P(frd) / (P(frd) + P(nfr))) * 100 — S2.9

Add Alarm to Stack of Alarms to be Processed by Fraud Analysts, Ranked by Score, or Update Alarm Ranking in Stack of Alarms if Alarm Exists — S2.10

Fig. 4

```
                              ┌────────────────────────────────────┐
                              │  Receive Investigated Alarm Data   │  S3.1
                              └────────────────────────────────────┘
                                             │
                                             ▼
              yes                     ◇ Fraudulent Use? ◇        no    S3.2
         ┌───────────────────────────                    ───────────────────────────┐
         ▼                                                                           ▼
┌──────────────────────────────┐                            ┌──────────────────────────────┐
S3.3a    │ Update 'N' and 'M' Parameters of │                │ Update 'N' and 'M' Parameters of │    S3.3b
         │   Intermediate Fraud Model        │                │ Intermediate Non-Fraud Model     │
         └──────────────────────────────┘                            └──────────────────────────────┘
                      │                                                          │
                      ▼                                                          ▼
┌──────────────────────────────┐                            ┌──────────────────────────────┐
S3.4a    │   Update Transition Matrix of     │                │   Update Transition Matrix of    │    S3.4b
         │   Intermediate Fraud Model        │                │ Intermediate Non-Fraud Model     │
         └──────────────────────────────┘                            └──────────────────────────────┘
                      │                                                          │
                      ▼                                                          ▼
┌──────────────────────────────┐                            ┌──────────────────────────────┐
S3.5a    │     Update Sensor Matrix of       │                │     Update Sensor Matrix of      │    S3.5b
         │   Intermediate Fraud Model        │                │ Intermediate Non-Fraud Model     │
         └──────────────────────────────┘                            └──────────────────────────────┘
                      │                                                          │
                      ▼                                                          ▼
┌──────────────────────────────┐                            ┌──────────────────────────────┐
S3.6a    │  Update Prior Probability List of │                │ Update Prior Probability List of │    S3.6b
         │   Intermediate Fraud Model        │                │ Intermediate Non-Fraud Model     │
         └──────────────────────────────┘                            └──────────────────────────────┘
```

Fig. 5

EP 2 045 995 A1

Europäisches
Patentamt
European
Patent Office
Office européen
des brevets

**EUROPEAN SEARCH REPORT**

Application Number

EP 08 10 0243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/044406 A1 (STUTE MICHAEL [US]) 24 February 2005 (2005-02-24) * paragraphs [0057] - [0059] * * paragraphs [0073], [0076]; figure 2 * ----- | 1-15 | INV. H04L29/06 |
| X | CHUN YANG ET AL: "An Unsupervised Anomaly Detection Approach using Subtractive Clustering and Hidden Markov Model" PROCEEDINGS OF THE SECOND INTERNATIONAL CONFERENCE ON COMMUNICATIONS AND NETWORKING IN CHINA (CHINACOM), 22 August 2007 (2007-08-22), XP031237893 ISBN: 978-1-4244-1008-8 * section III-D * * section III-F * ----- | 1-15 | |
| A | US 2003/097439 A1 (STRAYER WILLIAM TIMOTHY [US] ET AL) 22 May 2003 (2003-05-22) * paragraphs [0105] - [0110]; figures 7A,7B * ----- | 1-15 | |
| | | | TECHNICAL FIELDS SEARCHED (IPC) H04L |

The present search report has been drawn up for all claims

| Place of search | Date of completion of the search | Examiner |
|---|---|---|
| Munich | 17 February 2009 | Tabery, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

**ANNEX TO THE EUROPEAN SEARCH REPORT
ON EUROPEAN PATENT APPLICATION NO.**

EP 08 10 0243

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2009

| Patent document cited in search report | | Publication date | Patent family member(s) | Publication date |
|---|---|---|---|---|
| US 2005044406 | A1 | 24-02-2005 | NONE | |
| US 2003097439 | A1 | 22-05-2003 | NONE | |